# EUROPEAN PATENT APPLICATION

(11) **EP 4 401 426 A1**
(43) Date of publication of application: **17.07.2024**
(21) Application number: 21958944.7
(22) Date of filing: 30.09.2021
(51) Int. Cl.: H04W 4/06

(54) **COMMUNICATION METHOD APPLIED TO POINT-TO-MULTIPOINT SHORT-DISTANCE WIRELESS COMMUNICATION SYSTEM AND DEVICE**

(71) Applicant: Huawei Technologies Co., Ltd., Shenzhen, Guangdong 518129 (CN)
(72) Inventor: XIE, Zichen, Shenzhen, Guangdong 518129 (CN); GUO, Zhan, Shenzhen, Guangdong 518129 (CN); LI, Weihua, Shenzhen, Guangdong 518129 (CN)
(74) Representative: Epping - Hermann - Fischer
(86) International application number: PCT/CN2021/122351
(87) International publication number: WO 2023/050372

(57) **Abstract**

This application discloses a communication method and a device that are applied to a point-to-multipoint short-range wireless communication system. In the method, when there is a data transmission requirement between two slave devices in a short-range wireless communication system, any one of the two slave devices may send a communication request to a master device, so that the master device allocates an air interface resource for data transmission between the two slave devices, and the two slave devices can perform data transmission based on the air interface resource allocated by the master device. The air interface resource required for data transmission between the two slave devices is allocated according to requirements, in other words, a communication link between the two slave devices is a temporary link established according to requirements. Therefore, when there is no data transmission requirement between the two slave devices, the air interface resource is released, no additional air interface resource is occupied, and the slave device does not need to send an empty packet to maintain the communication link. In conclusion, the method does not cause a waste of power consumption of the slave device or a waste of air interface resources.

## Description

### TECHNICAL FIELD

This application relates to the field of communication technologies, and in particular, to a communication method and a device that are applied to a point-to-multipoint short-range wireless communication system.

### BACKGROUND

By using a short-range wireless communication technology, communication between terminal devices such as a computer, a notebook computer, a mobile phone, a headset, and a sound box can be effectively simplified, and communication between a terminal device and a network can also be simplified, so that some small-sized, portable, or wearable terminal devices can be connected to a network without using a cable, thereby forming a point-to-point or point-to-multipoint communication system. As a typical short-range wireless communication technology, a Bluetooth (Bluetooth, BT) technology can implement bidirectional voice and data communication, and therefore has a wide application scenario and application scope. The following uses the Bluetooth technology as an example for description.

The Bluetooth technology can be used to establish a temporary peering connection. Bluetooth devices can be classified into master (master) devices and slave (slave) devices based on their roles in a system. The master device is a Bluetooth device that actively initiates a connection request in a networking connection process. In other words, the master device needs to search for a device and initiate pairing before establishing a connection.

Currently, the master device can simultaneously establish connections to a plurality of slave devices, to form a point-to-multipoint Bluetooth system. However, in some scenarios, different slave devices in a Bluetooth system need to exchange cooperation data, for example, data synchronization, configuration information synchronization, and interference information transmission. In this case, a communication link needs to be established between slave devices that need to cooperate in a communication network, to implement communication. However, to ensure that the communication link is not disconnected, even if no specific cooperation data needs to be transmitted between the two slave devices, an empty packet needs to be periodically sent. It is clear that, to maintain the communication link, an air interface resource corresponding to the communication link needs to be maintained between the two slave devices.

It can be learned from the foregoing analysis of an existing solution of transmitting cooperation data between slave devices through a communication link that, even if no cooperation data is transmitted between the slave devices, an empty packet needs to be sent to maintain the communication link, which causes a waste of power consumption of the slave devices. In addition, to maintain the communication link, an air interface resource needs to be continuously maintained, and an air interface resource in a system is further occupied. For example, a time domain resource that is reserved for cooperation between slave devices in an event (event) periodicity occupies an opportunity of retransmission from the master device to the slave device and an opportunity of access from more slave devices in the event periodicity, thereby causing a waste of air interface resources.

### SUMMARY

This application provides a communication method and a device that are applied to a point-to-multipoint short-range wireless communication system, to reduce power consumption and a waste of air interface resources in the short-range wireless communication system.

According to a first aspect, an embodiment of this application provides a communication method applied to a point-to-multipoint short-range wireless communication system. The method includes: After receiving a communication request from a first slave device, a master device in the short-range wireless communication system sends resource configuration information in response to the communication request, where the communication request is used to request to perform data transmission with a second slave device, the resource configuration information indicates a target air interface resource, and the target air interface resource is an air interface resource used for data transmission between the first slave device and the second slave device.

According to the method, when there is a data transmission requirement between the two slave devices in the short-range wireless communication system, any one of the two slave devices may send a communication request to the master device, so that the master device allocates an air interface resource for data transmission between the two slave devices, and the two slave devices can perform data transmission based on the air interface resource allocated by the master device. The air interface resource required for data transmission between the two slave devices is allocated according to requirements, that is, a communication link between the two slave devices is a temporary link established according to requirements. Therefore, when there is no data transmission requirement between the two slave devices, no additional air interface resource is occupied, and the slave device does not need to send an empty packet to maintain the communication link. In conclusion, the method does not cause a waste of power consumption of the slave device or a waste of air interface resources.

In a possible design, the target air interface resource includes at least one of the following: a target frequency domain resource and a target time domain resource.

In a possible design, when the target air interface resource includes the target time domain resource, the resource configuration information includes at least one of the following: clock synchronization information, an offset value of the target time domain resource relative to a specified moment, and duration of the target time domain resource, where the clock synchronization information indicates to keep clock synchronization with the master device.

According to this design, the master device may further configure a time domain resource used for transmission of cooperation data between the two slave devices. The first slave device and the second slave device may determine a location of the target time domain resource based on the offset value of the target time domain resource relative to the specified moment and the duration of the target time domain resource in the resource configuration information. In addition, to ensure absolute clock alignment of the target time domain resources determined by the first slave device and the second slave device, the clock synchronization information in the resource configuration information may indicate to keep clock synchronization with the master device in the communication system. In this way, efficiency of transmitting the cooperation data between the two slave devices can be ensured. For example, the specified moment may be a moment agreed on by the master device and the slave device in the communication system, for example, a moment for sending a synchronization signal; or may be a moment specified by the master device, for example, a slot, a symbol, or a second. This is not limited in this application.

In a possible design, the target time domain resource may include a time domain resource used by the first slave device to send first cooperation data to the second slave device and a time domain resource used by the second slave device to send second cooperation data to the first slave device.

In a possible design, when the target air interface resource includes the target frequency domain resource, the resource configuration information includes frequency indication information that indicates the target frequency domain resource.

According to this design, the master device may further configure a frequency domain resource used for transmission of the cooperation data between the two slave devices.

In a possible design, the resource configuration information further includes security protection information, and the security protection information indicates at least one of the following: an encryption manner, an encryption algorithm, and a key.

In this design, the master device may further configure the security protection information used for transmission of the cooperation data between the two slave devices. In this way, when receiving the resource configuration information, the two slave devices may encrypt to-be-transmitted cooperation data based on the security protection information in the resource configuration information, thereby ensuring security of the cooperation data.

In a possible design, the resource configuration information further indicates a response air interface resource allocated by the master device for the two slave devices to transmit response information of the cooperation data. Similar to the target air interface resource, the response air interface resource includes at least one of the following: a response time domain resource and a response frequency domain resource. When the response air interface resource includes the response time domain resource, the resource configuration information further includes at least one of the following: an offset value of the response time domain resource relative to a specified moment, and duration of the response time domain resource.

According to this design, the first slave device and the second slave device may further determine a location of the responding air interface resource based on the resource configuration information, so that the response information of the cooperation data can be transmitted based on the responding air interface resource.

In a possible design, the resource configuration information is further used to indicate the master device to allocate a retransmission air interface resource for retransmission of the cooperation data between the two slave devices. In this case, the resource configuration information further indicates the retransmission air interface resource. Similar to the target air interface resource, the retransmission air interface resource includes at least one of the following: a retransmission time domain resource and a retransmission frequency domain resource. When the retransmission air interface resource includes the retransmission time domain resource, the resource configuration information may further include at least one of the following: an offset value of the retransmission time domain resource relative to a specified moment, and duration of the retransmission time domain resource.

According to this design, the two slave devices may further determine a location of the retransmission air interface resource based on the resource configuration information. In this way, when receiving response information indicating that receiving fails from a receiver, a sender of the cooperation data may retransmit the cooperation data based on the retransmission air interface resource, and the receiver may re-receive the cooperation data based on the retransmission air interface resource.

In a possible design, the master device may send the resource configuration information in the following two manners. Manner 1: The master device may broadcast the resource configuration information. Manner 2: The master device may separately send the resource configuration information to the first slave device and the second slave device.

In a possible design, the master device may broadcast the resource configuration information in the following steps: When the master device further reserves a broadcast time domain resource for broadcasting a synchronization signal (in an event period), the master device may broadcast, on the broadcast time domain resource, a synchronization frame that carries the resource configuration information. The synchronization frame further includes a clock synchronization signal.

According to this design, the master device may send the resource configuration information to the slave device by using the air interface resource used for broadcasting a signal to the slave device.

In a possible design, the master device may separately send the resource configuration information to the first slave device and the second slave device by using the following steps: sending, to the first slave device on a first time domain resource in the event periodicity, a first data frame that carries the resource configuration information; and sending, to the second slave device on a second time domain resource in the event periodicity, a second data frame that carries the resource configuration information. The first time domain resource is a time domain resource reserved in the event periodicity for the master device to send service data to the first slave device, the second time domain resource is a time domain resource reserved for the master device to send service data to the second slave device in the event periodicity, and the first time domain resource does not overlap the second time domain resource. According to this design, the master device may send the resource configuration information to the slave device by using the air interface resource for sending the service data to the slave device.

In a possible design, the master device may receive the communication request from the first slave device in the following steps: receiving the communication request on a third time domain resource in the event periodicity, where the third time domain resource is a time domain resource reserved for the first slave device to feed back response information of the service data to the master device in the event periodicity.

According to this design, the first slave device may send the communication request to the master device by using the time domain resource reserved for feeding back the response information of the service data to the master device.

In a possible design, the first slave device and the second slave device are binaural true wireless TWS Bluetooth headsets.

According to a second aspect, an embodiment of this application provides a communication method applied to a point-to-multipoint short-range wireless communication system. The method includes: A first slave device in the short-range wireless communication system receives resource configuration information sent by a master device in response to a communication request, where the resource configuration information indicates a target air interface resource, the target air interface resource is an air interface resource used for data transmission between the first slave device and a second slave device, and the communication request is used to request data transmission between the first slave device and the second slave device; the first slave device transmits data with the second slave device by using the target air interface resource indicated by the resource configuration information.

According to this design, when there is a data transmission requirement between the two slave devices in the short-range wireless communication system, any one of the two slave devices may send a communication request to the master device, so that the master device allocates the air interface resource for data transmission between the two slave devices, and the two slave devices can perform data transmission based on the air interface resource allocated by the master device. The air interface resource required for data transmission between the two slave devices is allocated according to requirements, that is, a communication link between the two slave devices is a temporary link established according to requirements. Therefore, when there is no data transmission requirement between the two slave devices, no additional air interface resource is occupied, and the slave device does not need to send an empty packet to maintain the communication link. In conclusion, the method does not cause a waste of power consumption of the slave device or a waste of air interface resources.

In a possible design, the target air interface resource includes at least one of the following: a target frequency domain resource and a target time domain resource.

In a possible design, when the target air interface resource includes the target time domain resource, the resource configuration information includes at least one of the following: clock synchronization information, an offset value of the target time domain resource relative to a specified moment, and duration of the target time domain resource, where the clock synchronization information indicates to keep clock synchronization with the master device.

In a possible design, when the target resource includes the target frequency domain resource, the resource configuration information includes frequency indication information that indicates the target frequency domain resource.

In a possible design, the resource configuration information further includes security protection information, and the security protection information indicates at least one of the following: an encryption manner, an encryption algorithm, and a key.

In a possible design, the first slave device may receive, in the following two manners, the resource configuration information that is from the master device in response to the communication request. Manner 1: The first slave device receives, in an event event periodicity, a synchronization frame that carries the resource configuration information. Manner 2: The first slave device receives, on a first time domain resource in the event periodicity, a first data frame that carries the resource configuration information, where the first time domain resource is a time domain resource reserved in the event periodicity for the master device to send service data to the first slave device.

In a possible design, before the first slave device receives the resource configuration information from the master device in response to the communication request, the first slave device sends the communication request to the master device.

In a possible design, that the first slave device sends the communication request to the master device includes: sending the communication request to the master device on a third time domain resource in the event periodicity, where the third time domain resource is a time domain resource reserved for the first slave device to feed back response information of the service data to the master device in the event periodicity.

In a possible design, the communication request is sent by the second slave device to the master device.

In a possible design, the first slave device and the second slave device are binaural real wireless TWS Bluetooth headsets, and data transmitted between the first slave device and the second slave device includes at least one of the following: playback synchronization information, volume synchronization information, headset location information, headset power information, configuration synchronization information, and interference information.

According to a third aspect, an embodiment of this application provides a communication apparatus, including a unit configured to perform the step in any one of the foregoing aspects.

According to a fourth aspect, an embodiment of this application provides a communication device, including a transceiver, a processor coupled to the transceiver, and a memory. The processor reads and executes a program and data that are stored in the memory, and receives and sends data by using the transceiver, so that the method provided in any one of the foregoing aspects of this application is implemented.

According to a fifth aspect, an embodiment of this application provides a short-range wireless communication system, including a master device configured to perform the method provided in the first aspect and at least two slave devices configured to perform the method provided in the second aspect.

According to a sixth aspect, an embodiment of this application further provides a computer program. When the computer program is run on a computer, the computer is enabled to perform the method provided in any one of the foregoing aspects.

According to a seventh aspect, an embodiment of this application further provides a computer-readable storage medium. The computer-readable storage medium stores a computer program. When the computer program is executed by a computer, the computer is enabled to perform the method provided in any one of the foregoing aspects.

According to an eighth aspect, an embodiment of this application further provides a chip. The chip is configured to read a computer program stored in a memory, to perform the method provided in any one of the foregoing aspects.

According to a ninth aspect, an embodiment of this application further provides a chip system. The chip system includes a processor, configured to support a computer apparatus in implementing the method provided in any one of the foregoing aspects. In a possible design, the chip system further includes a memory. The memory is configured to store a program and data that are necessary for the computer apparatus. The chip system may include a chip, or may include a chip and another discrete component.

For technical effects that can be achieved in any one of the second aspect to the ninth aspect, refer to descriptions of technical effects that can be achieved in any one of the possible designs of the first aspect. No repeated description is provided.

### BRIEF DESCRIPTION OF DRAWINGS

FIG. 1 is a schematic diagram of an architecture of a point-to-multipoint short-range wireless communication system according to an embodiment of this application;
FIG. 2A is a schematic diagram of an example of a Bluetooth system according to an embodiment of this application;
FIG. 2B is a schematic diagram of a transmission mode of a Bluetooth system according to an embodiment of this application;
FIG. 2C is a schematic diagram of a transmission mode of another Bluetooth system according to an embodiment of this application;
FIG. 2D is a schematic diagram of time domain resource configuration in a conventional event periodicity;
FIG. 3 is a flowchart of a communication method according to an embodiment of this application;
FIG. 4A is a schematic diagram of an example of time domain resource configuration in an event periodicity in a Bluetooth system according to an embodiment of this application;
FIG. 4B is a schematic diagram of an example of time domain resource configuration in an event periodicity in a Bluetooth system according to an embodiment of this application;
FIG. 4C is a schematic diagram of an example of time domain resource configuration in an event periodicity in a Bluetooth system according to an embodiment of this application;
FIG. 4D is a schematic diagram of an example of time domain resource configuration in an event periodicity in a Bluetooth system according to an embodiment of this application;
FIG. 4E is a schematic diagram of an example of communication of a Bluetooth system according to an embodiment of this application;
FIG. 5 is a schematic diagram of an example of an architecture of a Bluetooth system according to an embodiment of this application;
FIG. 6 is a schematic diagram of a structure of a communication apparatus according to an embodiment of this application; and
FIG. 7 is a schematic diagram of a structure of a communication device according to an embodiment of this application.

### DESCRIPTION OF EMBODIMENTS

This application provides a communication method and a device that are applied to a point-to-multipoint short-range wireless communication system, to reduce power consumption and a waste of air interface resources in the short-range wireless communication system. The method and the device that are provided in embodiments of this application are based on a same technical concept. Because problem-resolving principles are similar, mutual reference may be made to implementations of the device and the method, and repeated parts are not described again.

In the following, some terms in this application are described, to help a person skilled in the art have better understanding.
1. A short-distance wireless communication technology is a communication technology in which two communication parties in a small range transmit information by using a radio wave, and generally has the following features:
   low costs, where the communication parties usually work on unlicensed open frequency bands;
   low power consumption, where compared with that in a cellular communication technology, transmit power of a wireless transmitter is generally within 100 mW; and
   short-distance peer-to-peer communication, where a communication distance is usually within tens of meters or hundreds of meters.
   For example, the short-range wireless communication technology may include but is not limited to: a radio frequency identification (radio frequency identification, RFID) technology, a Bluetooth technology, a wireless fidelity (wireless-fidelity, Wi-Fi) technology, a ZigBee (ZigBee) technology, an ultra wideband (ultra wideband, UWB) technology, a communication technology evolved based on the foregoing communication technology, a communication technology that has a same or similar function as the foregoing communication technology and that can replace each other, and the like.
2. A short-range wireless communication system is a communication system established by a plurality of terminal devices according to the short-range wireless communication technology, and may be referred to as a communication system for short in embodiments of this application. Specifically, according to different used specific communication technologies, the system may be specifically classified into an RFID system, a Bluetooth system, a Wi-Fi system, and the like.
   Based on a role or a function in the communication system, two device types may be defined for a terminal device in the communication system: a master device and a slave device.
   There is a communication link between the master device and all slave devices in the communication system; and the master device can control and manage all the slave devices, and perform service communication with each slave device. In the communication system, all terminal devices other than the master device are slave devices.
   Generally, there is one master device and at least one slave device in a short-range wireless communication system. In embodiments of this application, a short-range wireless communication system having one master device and a plurality of slave devices is referred to as a point-to-multipoint short-range wireless communication system. It should be understood that, in some communication scenarios, there may alternatively be a plurality of master devices in a short-range wireless communication system.
3. A Bluetooth system is a communication system established by at least two terminal devices according to a Bluetooth technology, and may alternatively be referred to as a Bluetooth network, a communication network, a micronet, or a piconet (piconet). A terminal device in the Bluetooth system may alternatively be referred to as a Bluetooth device. Two types of Bluetooth devices can be defined based on their roles in the Bluetooth system.

A master device is a Bluetooth device that actively initiates a connection request procedure in the Bluetooth system, where the connection request procedure includes device searching, pairing initiating, connection establishment, and the like. The master device is alternatively called a main control device. In addition, the master device is further responsible for providing a clock synchronization signal and a frequency hopping sequence for the slave device.

A slave device is a slave device other than the master device in the Bluetooth system, and is managed and controlled by the master device.

In the Bluetooth system, usually, one Bluetooth device is a master device, and other Bluetooth devices are slave devices, and this state keeps being maintained during existence of the Bluetooth system. Any slave device in the Bluetooth system may communicate with the master device, and the master device may communicate with a plurality of slave devices in the Bluetooth system.

4. An event periodicity, also referred to as a connection event (connection event) or a service event periodicity, refers to a process in which the master device and the slave device send data to each other in the Bluetooth system.

In an event periodicity, frequencies used for communication between the master device and the slave device are located at a same frequency. Therefore, to avoid interference, the Bluetooth system performs transmission in an event periodicity through time division multiplexing, that is, in an event periodicity, different time domain resources are used to transmit different signals.

5. A terminal device is a device that supports the short-range wireless communication technology and provides voice and/or data connectivity for a user.

For example, the terminal device may be a hand-held device or an in-vehicle device that has a wireless connection function. Currently, examples of some terminal devices are: a mobile phone (mobile phone), a tablet computer, a notebook computer, a palmtop computer, a mobile internet device (mobile internet device, MID), a smart point of sale (point of sale, POS), a wearable device (a true wireless stereo (true wireless stereo, TWS) Bluetooth headset), a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and various smart meters (a smart water meter, a smart meter, and a smart gas meter).

Usually, a terminal device that can be used as a master device in the short-range wireless communication system is a terminal device that can be easily operated by the user, has a display, and integrates a complex algorithm (with a management and control capability), for example, a mobile phone, a notebook computer, or a tablet computer. However, a small-sized, portable, and wearable terminal device can generally be used as a slave device in the Bluetooth system.

Certainly, device types of the master device and the slave device are not limited in this application, and the master device and the slave device in the short-range wireless communication system further need to be defined based on a specific scenario. For example, a mobile phone may be used as a master device in a Bluetooth system, and may be used as a slave device in another Bluetooth system.

6. A communication link is a communication line between two adjacent communication nodes, and there is no other communication node between the two communication nodes. The communication link is alternatively referred to as a communication connection, a connection, or a link. In embodiments of this application, all communication links related to the short-range wireless communication system are wireless air interface connections (which may alternatively be referred to as air interface connections for short).

For example, in the Bluetooth system, a communication link established by using the Bluetooth technology may alternatively be referred to as a Bluetooth connection.

7. Response information of data indicates a result (success or failure) of receiving the data by a data receiver. For example, the response information of the data is an acknowledgment (acknowledgement, ACK)/a negative acknowledgment (negative acknowledgement, NACK). For another example, the response information of the data may further indicate different receiving results by using values. For example, if a value of the response information of the data is 0, it indicates that receiving fails, or if a value of the response information of the data is 1, it indicates that receiving succeeds.

8. An air interface resource is a resource required for implementing wireless air interface transmission, and may alternatively be referred to as a channel resource or a channel, and may include but is not limited to a time domain resource and a frequency domain resource.

The time domain resource is continuous or discontinuous time used to implement air interface transmission. A counting unit of the time domain resource is not limited in embodiments of this application. Optionally, the time domain resource in this application may be counted in a conventional time unit, for example, second (second, s), millisecond (millisecond, ms), or microsecond (microsecond, µs). For another example, the time domain resource in this application may be alternatively calculated by using a time domain unit in the communication field, for example, a frame (frame), a subframe (subframe), a slot (slot), or a symbol (symbol).

A frequency domain resource is a continuous or discontinuous frequency band used to implement air interface transmission. Optionally, when the frequency domain resource is the continuous frequency band, the frequency domain resource may be represented by using a frequency of the frequency band.

9. The term "and/or" describes an association relationship between associated objects, and represents that three relationships may exist. For example, A and/or B may represent the following three cases: Only A exists, both A and B exist, and only B exists. The character "/" generally indicates an "or" relationship between the associated objects. It should be noted that "a plurality of in this application refers to two or more. "At least one" means one or more.

In addition, it should be understood that in description of this application, terms such as "first" and "second" are merely used for distinguishing and description, but should not be understood as indicating or implying relative importance, or should not be understood as indicating or implying a sequence.

The following describes in detail embodiments of this application with reference to accompanying drawings.

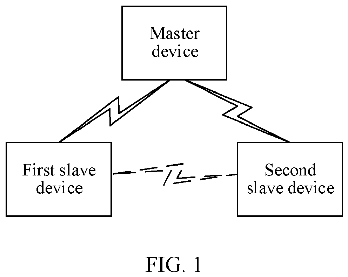

FIG. 1 shows an architecture of a typical point-to-multipoint short-range wireless communication system to which a communication method according to an embodiment of this application is applicable. Refer to FIG. 1. The communication system includes a master device and a plurality of slave devices (for example, a first slave device and a second slave device shown in FIG. 1).

The master device may establish temporary peer-to-peer communication links with the plurality of slave devices, to establish a point-to-multipoint communication system, and can control and manage all the slave devices in the communication system, and can perform service communication with each slave device in the communication system. For example, the master device may add or delete a slave device in the communication system, or allocate an air interface resource to a slave device.

In the communication system, the master device may perform data transmission with each slave device. Optionally, the master device may communicate with the plurality of slave devices in the following modes, but is not limited to the following modes.

In a transmission mode, the master device may broadcast service data to all the slave devices in the communication system in a broadcast manner.

In another transmission mode, the master device may interact with different slave devices in different time periods in a time division multiplexing manner.

In the communication system shown in FIG. 1, in addition to communication interaction between the master device and the slave device, in some scenarios, there is a temporary and occasional data transmission requirement between the slave devices. For example, data synchronization, configuration information synchronization, and interference information transmission need to be implemented between the two slave devices. Therefore, to ensure that data can be transmitted between two slave devices that have a data transmission requirement, a communication link also needs to be established between the two slave devices.

In a current solution, to ensure that the communication link between two slave devices is not disconnected, even if there is no specific data transmission between the two slave devices, an empty packet needs to be periodically sent to maintain the communication link, and an air interface resource corresponding to the communication link also needs to be continuously maintained between the two slave devices. Apparently, this solution causes a waste of power consumption of the slave device and a waste of air interface resources. In the foregoing solution, because the communication link maintained between the two slave devices is not disconnected, the communication link may alternatively be referred to as an entity link.

Based on this, an embodiment of this application provides a communication solution applied to the foregoing point-to-multipoint short-range wireless communication system. In the solution, when there is a data transmission requirement between two slave devices in the short-range wireless communication system, either of the two slave devices may send a communication request to a master device, so that the master device allocates an air interface resource to the two slave devices for data transmission, and the two slave devices can perform data transmission based on the air interface resource allocated by the master device. The air interface resource required for data transmission between the two slave devices is allocated according to requirements, that is, a communication link between the two slave devices is a temporary link (as shown by a dashed-line communication link in FIG. 1) established according to requirements. Therefore, when there is no data transmission requirement between the two slave devices, no additional air interface resource is occupied, and the slave device does not need to send an empty packet to maintain the communication link. In conclusion, the method does not cause a waste of power consumption of the slave device or a waste of air interface resources.

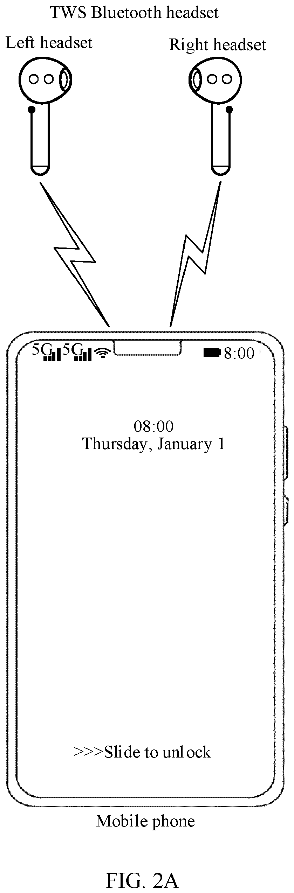

The following uses a Bluetooth system formed by a TWS Bluetooth headset and a mobile phone shown in FIG. 2A as an example for description. As shown in FIG. 2A, a left headset and a right headset in the TWS Bluetooth headset may be separately used as independent Bluetooth devices to establish a communication link with the mobile phone. In this scenario, the mobile phone is a master device, and both the left headset and the right headset are slave devices. In the Bluetooth system, a process of connecting the mobile phone to the TWS Bluetooth headset is as follows. After the Bluetooth function is enabled on the mobile phone, a Bluetooth device near the mobile phone may be found through a device searching process. When the mobile phone finds the TWS Bluetooth headset, the mobile phone displays a device identifier of the TWS Bluetooth headset is in a Bluetooth device list. After a user taps the device identifier of the TWS Bluetooth headset in the Bluetooth device list to notify the mobile phone to connect to the TWS Bluetooth headset, the mobile phone initiates pairing to the TWS Bluetooth headset, and after pairing succeeds, establishes communication connections with the left headset and the right headset of the TWS Bluetooth headset separately.

In the Bluetooth system shown in FIG. 2A, whether it is in a call scenario or a music scenario, the mobile phone and the TWS Bluetooth headset may perform data transmission in the following two transmission modes.

### Transmission mode 1: listening mode

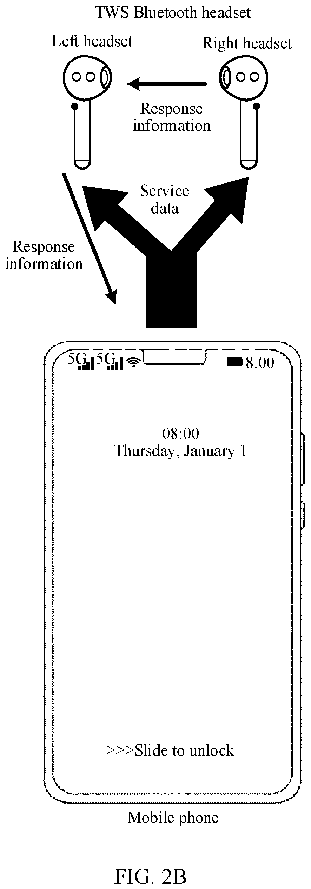

In this mode, the mobile phone broadcasts service data, and the left headset and the right headset concurrently receive the service data. In addition, to feed back response information of the service data to the mobile phone, the TWS Bluetooth headset may separately set the left headset and the right headset as a primary headset and a secondary headset. The secondary headset generates first response information based on a receiving result of the service data of the secondary headset, to indicate whether the service data is successfully received by the secondary headset, and then sends the first response information to the primary headset; and the primary headset generates second response information based on a receiving result of the service data of the primary headset, to indicate whether the service data is successfully received by the primary headset, and then generates third response information based on the received first response information and the generated second response information, and sends the third response information to the mobile phone; or the primary headset may send the first response information and the second response information to the mobile phone. For a specific process of sending the service data and a specific process of sending the response information, refer to FIG. 2B.

The mobile phone determines, based on the received third response information, or the received first response information and second response information, whether the service data needs to be retransmitted.

### Transmission mode 2: dual-transmit mode

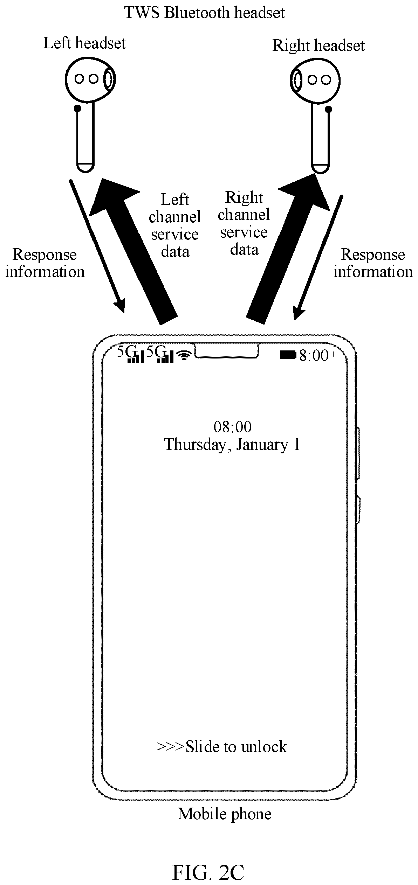

In this mode, the mobile phone separates service data (that is, left channel service data) of the left headset from service data (that is, right channel service data) of the right headset, and sends corresponding service data to the left headset and the right headset in turn, and the left headset and the right headset respectively return, to the mobile phone, response information that indicates a receiving result of the service data of the left headset and the service data of the right headset. For a specific process of sending the service data and a specific process of sending the response information, refer to FIG. 2C.

The mobile phone determines, based on the received response information of the left headset, whether to retransmit the left channel service data to the left headset, and determines, based on the received response information of the right headset, whether to retransmit the right channel service data to the right headset.

Regardless of which transmission mode is used, some necessary cooperative interaction needs to be performed between the left headset and the right headset. For example, the cooperation data that needs to be exchanged may be but is not limited to at least one of the following: playback synchronization information, volume synchronization information, headset location information, headset battery level information, configuration synchronization information, interference information, and the like.

To implement cooperative interaction, according to a conventional Bluetooth standard, a communication link needs to be established between the left headset and the right headset, and the communication link is a physical link, that is, a connection needs to be maintained continuously and cannot be disconnected. Therefore, even if there is no data that needs cooperation between the left headset and the right headset, an empty packet still needs to be sent at intervals of a period of time, to maintain connection of the communication link. If data is not continuously sent through the communication link, a timer expires, and the communication link is disconnected.

Therefore, based on the foregoing conventional solution of transmitting cooperation data between slave devices by using a communication link, to maintain a communication link between a left headset and a right headset, when no data needs to be transmitted between the two parties, an empty packet needs to be periodically sent between the left headset and the right headset, and an air interface resource corresponding to the communication link needs to be maintained in the Bluetooth system.

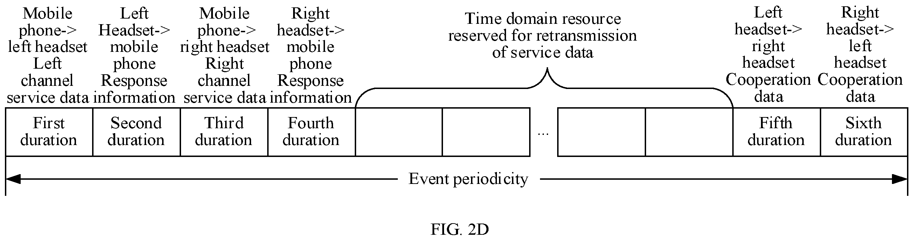

A dual-transmit mode is used as an example. Refer to FIG. 2D. In an event periodicity, the mobile phone needs to reserve the following time domain resources:
first duration, which is a time domain resource reserved for the mobile phone to send left channel service data to the left headset;
second duration, which is a time domain resource reserved for the left headset to feed back response information of the left channel service data to the mobile phone;
third duration, which is a time domain resource reserved for the mobile phone to send right channel service data to the right headset;
fourth duration, which is a time domain resource reserved for the right headset to feed back response information of the right channel service data to the mobile phone;
fifth duration, which is a time domain resource reserved for the left headset to send the cooperation data to the right headset; and
sixth duration, which is a time domain resource reserved for the right headset to send cooperation data to the left headset.

Optionally, to enable the two headsets to synchronize with a clock of the mobile phone, the mobile phone may further reserve, in each event periodicity, a time domain resource for sending a synchronization signal. For example, broadcast duration is reserved at a start phase of the event periodicity, and the mobile phone broadcasts, within the broadcast duration, a synchronization frame that carries a clock synchronization signal.

As shown in FIG. 2D, a resource other than the foregoing reserved time domain resources in the event periodicity may be used by the mobile phone to retransmit service data to the left headset or the right headset, or used by the mobile phone to perform service data transmission with another Bluetooth device that accesses the mobile phone. For a specific allocation status of a time domain resource used for service data retransmission, refer to a retransmission mechanism used in an existing system. Details are not described in this application.

It should be noted that in a scenario in which only the left headset sends cooperation data to the right headset, the mobile phone may reserve only the fifth duration, and does not need to reserve the sixth duration. In a scenario in which only the right headset sends cooperation data to the left headset, the mobile phone may reserve only the sixth duration, and does not need to reserve the fifth duration. In a scenario in which the left headset sends cooperation data to the right headset, and the right headset also needs to send cooperation data to the left headset, the mobile phone may reserve both the fifth duration and the sixth duration. Certainly, the mobile phone may alternatively directly reserve the fifth duration and the sixth duration without considering a transmission direction of the cooperation data when receiving a communication request of any headset.

It can be learned from FIG. 2D that, for an air interface, fixed fifth duration and/or sixth duration need/needs to be reserved in each event periodicity. To maintain a communication link between the two headsets, even if no cooperation data needs to be sent between the two headsets, an empty packet needs to be sent in the fifth duration and/or the sixth duration in each event periodicity. Apparently, the existing solution of establishing an entity link for occasional cooperation data transmission between two headsets not only causes a waste of power consumption of the headset, but also causes a waste of air interface resources, and occupies time domain resources for the mobile phone to retransmit service data to the headset in the event periodicity and more opportunities for a Bluetooth device to access the mobile phone.

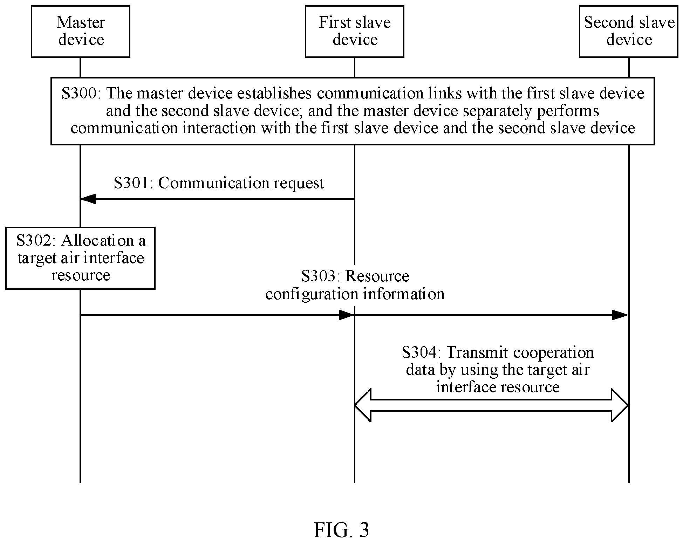

To resolve a problem of power consumption and air interface resource waste caused by maintaining a communication link between slave devices in a point-to-multipoint short-range wireless communication system, an embodiment of this application provides a communication method. The method may be applied to the short-range wireless communication system shown in FIG. 1. The following describes in detail the method provided in this embodiment of this application with reference to a flowchart shown in FIG. 3.

S300: A master device establishes a communication link with a first slave device and a second slave device, and then the master device separately performs communication interaction with the first slave device and the second slave device.

The master device may separately establish the communication link with the first slave device and the second slave device by using a short-range wireless communication technology, to form a short-range wireless communication system. The master device may control and manage the first slave device and the second slave device in the communication system.

It should be noted that in this embodiment of this application, only an example in which the communication system includes the first slave device and the second slave device is used for description, and a quantity of slave devices in the communication system is not limited. For example, the communication system may further include a third slave device, a fourth slave device, and the like. When there is a requirement for cooperation data transmission between any two slave devices, the method provided in this embodiment of this application may be used for implementation. After the first slave device and the second slave device access the master device, the master device may separately allocate an air interface resource to service data transmission of each slave device, to establish the communication link. Then, the master device may perform communication interaction with a corresponding slave device based on the air interface resource allocated to each slave device. For the foregoing process, refer to a conventional solution of transmitting service data between the master device and the slave device. Details are not described herein again. The following describes the air interface resource allocated by the master device to each slave device.

An air interface resource (a first air interface resource) allocated to the first slave device includes a time domain resource and a frequency domain resource. The time domain resource in the first air interface resource includes: a time domain resource (a first time domain resource for short) reserved for the master device to send service data to the first slave device, and a time domain resource (a second time domain resource for short) reserved for the first slave device to feed back response information of the service data to the master device.

Similarly, an air interface resource (a second air interface resource) allocated to the second slave device also includes a time domain resource and a frequency domain resource. The time domain resource in the second air interface resource includes: a time domain resource (a third time domain resource for short) reserved for the master device to send service data to the second slave device, and a time domain resource (a fourth time domain resource for short) reserved for the second slave device to feed back response information of the service data to the master device. Optionally, in a scenario in which a current communication system supports service data retransmission, the master device may further reserve, in an idle air interface resource, a time domain resource (a fifth time domain resource for short) for retransmitting the service data by the master device to the first slave device, and a time domain resource (a sixth time domain resource for short) for retransmitting the service data by the master device to the second slave device.

For example, when a short-range wireless communication system (for example, a Bluetooth system) defines, by using an event periodicity, a process in which the master device and the slave device send data to each other, the time domain resource of each slave device is a time domain resource in the event periodicity, and different time domain resources do not overlap.

After allocating the air interface resource to each slave device, the master device separately notifies the corresponding slave device. In this way, subsequently, the master device and any slave device may perform a corresponding data transmission operation by using each specific air interface resource allocated to the slave device, to implement a service of the slave device.

S301: When the first slave device has a cooperation data transmission requirement, the first slave device may send a communication request to the master device. The master device receives the communication request from the first slave device. The communication request is used to request to perform data transmission with the second slave device. Optionally, the first slave device may send the communication request to the master device on the second time domain resource, that is, the first slave device may send the response information of the service data and the communication request to the master device on the second time domain resource.

It should be noted that in this embodiment of this application, that the first slave device sends the communication request to the master device is merely used as an example, but does not constitute a limitation on a slave device that can send a communication request to the master device. In an actual scenario, any slave device in the short-range wireless communication system may send a communication request to the master device. For example, a left headset or a right headset in a TWS Bluetooth headset, or a primary headset in a case in which the primary headset is set, may send a communication request to the master device when there is a cooperation data transmission requirement.

In this embodiment of this application, that the first slave device has a cooperation data transmission requirement may include but is not limited to at least one of the following.
1. The first slave device generates or obtains cooperation data that needs to be sent to the second slave device.
2. The first slave device needs to obtain cooperation data from the second slave device.
3. The cooperation data transmission requirement is according to user indication, because of an abnormal function, or is periodically triggered.
4. The first slave device is subject to burst interference or has an excessively low battery level.
5. A function of the first slave device is affected because the first slave device does not cooperate with the second slave device to synchronize data.

Optionally, the cooperation data in this embodiment of this application may include but is not limited to at least one of the following: service data, configuration information, interference information, and working status information (for example, power information, volume information, and location information). For example, when the first slave device and the second slave device are TWS Bluetooth headsets, the cooperation data may include at least one of the following: playback synchronization information, volume synchronization information, headset location information, headset battery level information, configuration synchronization information, and interference information.

S302: The master device allocates a target air interface resource in response to the communication request. The target air interface resource is an air interface resource used for data transmission between the first slave device and the second slave device.

To avoid affecting transmission of normal service data, the master device may allocate, on another idle air interface resource other than the first air interface resource and the second air interface resource, the target air interface resource to transmit the cooperation data between the two slave devices; or occupy the fifth time domain resource and/or the sixth time domain resource to allocate the target air interface resource to transmit the cooperation data between the two slave devices (for example, when idle air interface resources are not sufficient).

S303: The master device sends resource configuration information. The first slave device receives the resource configuration information sent by the master device in response to the communication request. The second slave device receives the resource configuration information sent by the master device in response to the communication request. The resource configuration information indicates the target air interface resource.

The target air interface resource includes at least one of the following: a target frequency domain resource and a target time domain resource.

In an implementation, the target air interface resource includes the target time domain resource. In this implementation, the resource configuration information may include at least one of the following: clock synchronization information, an offset value of the target time domain resource relative to a specified moment, and duration of the target time domain resource.

To ensure transmission efficiency of the cooperation data, the first slave device and the second slave device need clock alignment. Therefore, the clock synchronization information in the resource configuration information may indicate to keep clock synchronization with the master device in the communication system. The specified moment may be a moment agreed on by the master device and the slave device in the communication system, for example, a moment for sending a synchronization signal; or may be a moment specified by the master device, for example, a slot, a symbol, or a second. This is not limited in this application.

Because the cooperation data may be transmitted unidirectionally or bidirectionally between the two slave devices, the target time domain resource may include at least one of the following:
a time domain resource (a seventh time domain resource for short) used by the first slave device to send first cooperation data to the second slave device, and a time domain resource (an eighth time domain resource for short) used by the second slave device to send second cooperation data to the first slave device.

Optionally, when the target time domain resource includes the seventh time domain resource and the eighth time domain resource, the offset value of the target time domain resource relative to the specified moment in the resource configuration information may specifically include: an offset value of the seventh time domain resource relative to a first specified moment, and/or an offset value of the eighth time domain resource relative to a second specified moment. The first specified moment and the second specified moment may be a same moment, or may be different moments. The duration of the target time domain resource in the resource configuration information may specifically include duration of the seventh time domain resource and duration of the eighth time domain resource, or duration of the seventh time domain resource/duration of the eighth time domain resource and total duration of the target time domain resource.

In this way, the first slave device and the second slave device may determine locations of the seventh time domain resource and the eighth time domain resource based on the resource configuration information, to transmit the first cooperation data on the seventh time domain resource and transmit the second cooperation data on the eighth time domain resource.

In another implementation, the target air interface resource includes the target frequency domain resource. In this case, the resource configuration information includes frequency indication information that indicates the target frequency domain resource.

In still another implementation, in a scenario in which security protection is required for the cooperation data transmitted between the two slave devices, the resource configuration information may further include security protection information. The security protection information indicates at least one of the following: an encryption manner, an encryption algorithm, a key, and the like. In this way, when receiving the resource configuration information, the two slave devices may encrypt to-be-transmitted cooperation data based on the security protection information in the resource configuration information, thereby ensuring security of the cooperation data.

In yet another implementation, in a process of transmitting the cooperation data between the two slave devices, the slave device may further feed back response information of the cooperation data based on a receiving result of the cooperation data. In this scenario, the master device may further allocate a response air interface resource to the response information of transmitting the cooperation data between the two slave devices. In this case, the resource configuration information further indicates the response air interface resource.

Similar to the target air interface resource, the response air interface resource includes at least one of the following: a response time domain resource and a response frequency domain resource. When the target time domain resource includes the seventh time domain resource, the response air interface resource includes a ninth time domain resource used by the second slave device to send response information of the first cooperation data to the first slave device. When the target time domain resource includes the eighth time domain resource, the response air interface resource includes a tenth time domain resource used by the first slave device to send response information of the second cooperation data to the second slave device.

In this implementation, the resource configuration information further includes at least one of the following: an offset value of the response time domain resource relative to a specified moment, and duration of the response time domain resource.

Optionally, when the response time domain resource includes the ninth time domain resource and the tenth time domain resource, the offset value of the response time domain resource relative to the specified moment in the resource configuration information may specifically include: an offset value of the ninth time domain resource relative to a third specified moment, and/or an offset value of the tenth time domain resource relative to a fourth specified moment. The first specified moment, the second specified moment, the third specified moment, and the fourth specified moment may be a same moment, or may be different moments. The duration of the response time domain resource in the resource configuration information may specifically include: duration of the ninth time domain resource and duration of the tenth time domain resource, or duration of the ninth time domain resource/duration of the tenth time domain resource, and total duration of the response time domain resource.

In this way, the first slave device and the second slave device may determine locations of the ninth time domain resource and the tenth time domain resource based on the resource configuration information, to transmit the response information of the first cooperation data on the ninth time domain resource, and transmit the response information of the second cooperation data on the tenth time domain resource.

In still another implementation, in a scenario in which a current communication system supports retransmission of the cooperation data, the master device may further allocate a retransmission air interface resource for retransmission of the cooperation data between the two slave devices. In this case, the resource configuration information further indicates a retransmission air interface resource.

Similar to the target air interface resource, the retransmission air interface resource includes at least one of the following: a retransmission time domain resource and a retransmission frequency domain resource. When the target time domain resource includes the seventh time domain resource, the retransmission air interface resource includes an eleventh time domain resource used by the first slave device to retransmit the first cooperation data to the second slave device; and when the target time domain resource includes the eighth time domain resource, the retransmission air interface resource includes a twelfth time domain resource used by the second slave device to retransmit the second cooperation data to the first slave device.

In this implementation, the resource configuration information may further include at least one of the following: an offset value of the retransmission time domain resource relative to a specified moment, and duration of the retransmission time domain resource.

Optionally, when the retransmission time domain resource includes the eleventh time domain resource and the twelfth time domain resource, the offset value of the retransmission time domain resource relative to the specified moment in the resource configuration information may specifically include: an offset value of the eleventh time domain resource relative to a fifth specified moment, and/or an offset value of the twelfth time domain resource relative to a sixth specified moment. The first specified moment, the second specified moment, the third specified moment, the fourth specified moment, the fifth specified moment, and the sixth specified moment may be a same specified moment or, may be different moments. The duration of the retransmission time domain resource in the resource configuration information may specifically include: duration of the eleventh time domain resource and duration of the twelfth time domain resource, or duration of the eleventh time domain resource/duration of the twelfth time domain resource, and total duration of the retransmission time domain resource.

In this way, the first slave device and the second slave device may determine locations of the eleventh time domain resource and the twelfth time domain resource based on the resource configuration information, to retransmit the first cooperation data on the eleventh time domain resource and retransmit the second cooperation data on the tenth time domain resource.

In this embodiment, the master device may send the resource configuration information in the following manner. Manner 1: The master device broadcasts the resource configuration information.

When the master device further reserves a broadcast time domain resource for broadcasting a synchronization signal (in the event periodicity), the master device may broadcast, in the broadcast time domain resource, a synchronization frame that carries the resource configuration information. The synchronization frame further includes a clock synchronization signal.

In this manner, the master device may send the resource configuration information to the slave device by sending, to the slave device, the air interface resource used for broadcasting the signal.

Manner 2: The master device separately sends the resource configuration information to the first slave device and the second slave device.

In this manner, the master device may separately send respective service data and resource configuration information to the two slave devices. Specifically, the master device may send, to the first slave device on the first time domain resource, a first data frame that carries the resource configuration information; and send, to the second slave device on the third time domain resource, a second data frame that carries the resource configuration information. The first data frame may further include service data of the first slave device, and the second data frame may further include service data of the second slave device.

In this manner, the master device may send the resource configuration information to the slave device by sending the air interface resource of the service data to the slave device.

In Manner 2, when the master device accesses a plurality of slave devices, to enable the master device to determine that the second slave device communicates with the first slave device, so that the resource configuration information can be sent to the second slave device, this embodiment of this application may be implemented in the following implementations.

In an implementation, the communication request sent by the first slave device may carry device information of the second slave device. In this way, after allocating the target air interface resource, the master device may feed back the resource configuration information to the second slave device.

In another implementation, when the first slave device and the second slave device are in a pair or have unified device information, after receiving the communication request of the first slave device, the master device may determine the second slave device that is in a pair with or has the same device information as the first slave device.

It should be noted that, when a process of mutual communication between the master device and the slave device is defined in the short-range wireless communication system by using the event periodicity, all of the time domain resources (the first time domain resource to the twelfth time domain resource, the broadcast time domain resource, and the like) defined above are time domain resources in the event periodicity, and different time domain resources do not overlap. Because a bandwidth used in a short-range wireless communication system is generally a narrowband, a same frequency domain resource may be used for communication between all devices in the communication system. Therefore, a frequency domain resource in the air interface resource in the foregoing implementations is not described in detail in this application. Certainly, in some scenarios, similar to the foregoing time domain resources, the master device may also allocate different frequency domain resources to different signal transmission. Details are not described herein again.

In addition, it should be further noted that, when a process of mutual communication between the master device and the slave device is defined by using an event periodicity in the short-range wireless communication system (for example, a Bluetooth system), the first slave device may send the communication request to the master device on a second time domain resource in a current event periodicity, and the master device may send the resource configuration information by using a time domain resource in a next (or a subsequent m^{th}) event periodicity.

It should be understood that a sequence, a length, and the like of the time domain resources in the air interface resources are not limited in this application.

S304: The first slave device and the second slave device transmit cooperation data with each other by using the target air interface resource indicated by the resource configuration information.

Corresponding to the description in S303, any slave device may determine the target air interface resource in the following implementation.

In an implementation, the target air interface resource includes the target time domain resource. The resource configuration information may include at least one of the following: the clock synchronization information, the offset value of the target time domain resource relative to the specified moment, and the duration of the target time domain resource.

Any slave device may keep clock synchronization with the master device based on the clock synchronization information in the resource configuration information. Both the two slave devices keep clock synchronization with the master device, and clock alignment can further be implemented between the two slave devices. In this way, the target time domain resources determined by the two slave devices based on the resource configuration information are also clock-aligned. When the two slave devices transmit the cooperation data based on the target time domain resource, transmission efficiency of the cooperation data can be ensured.

Any slave device may accurately determine the location of the target time domain resource based on the offset value of the target time domain resource relative to the specified moment and the duration of the target time domain resource that are included in the resource configuration information, so that the cooperation data can be transmitted on the target time domain resource.

Optionally, when the target time domain resource includes the seventh time domain resource, in S304, the first slave device sends the first cooperation data to the second slave device on the seventh time domain resource, and the second slave device may receive the first cooperation data from the first slave device on the seventh time domain resource. Optionally, when the target time domain resource includes the eighth time domain resource, in S304, the second slave device sends second cooperation data to the first slave device on the eighth time domain resource; and the first slave device may receive the second cooperation data from the second slave device on the eighth time domain resource.

In another implementation, when the target air interface resource further includes the target frequency domain resource, the resource configuration information includes the frequency indication information that indicates the target frequency domain resource. In this implementation, any slave device may determine the target frequency domain resource based on the frequency indication information included in the resource configuration information. In this way, in S304, the slave device may perform cooperation data transmission with another slave device by using the target frequency domain resource.

In still another implementation, the resource configuration information may further include the security protection information, and the security protection information indicates at least one of the following: the encryption manner, the encryption algorithm, the key, and the like. In this implementation, a sender of the cooperation data may encrypt to-be-transmitted cooperation data based on the security protection information included in the resource configuration information, and a receiver of the cooperation data may decrypt the received encrypted cooperation data based on the security protection information included in the resource configuration information. In this implementation, security of cooperation data transmitted between slave devices in the short-range wireless communication system can be ensured.

In yet another implementation, the resource configuration information further indicates the response air interface resource. The response air interface resource includes the response time domain resource and the response frequency domain resource. In this implementation, the resource configuration information further includes at least one of the following: the offset value of the response time domain resource relative to the specified moment, and the duration of the response time domain resource.

Any slave device may further determine the location of the response time domain resource based on the foregoing information included in the resource configuration information, to transmit the response information of the cooperation data on the response time domain resource.

Optionally, when the response time domain resource includes the ninth time domain resource, after S304, the second slave device sends the response information of the first cooperation data to the first slave device on the ninth time domain resource, and the first slave device may receive the response information of the first cooperation data from the second slave device on the ninth time domain resource.

Optionally, when the response time domain resource includes the tenth time domain resource, after S304, the first slave device may send the response information of the second cooperation data to the second slave device on the tenth time domain resource, and the second slave device may receive the response information of the second cooperation data from the first slave device on the tenth time domain resource.

In yet another implementation, in a scenario in which the current communication system supports retransmission of the cooperation data, the resource configuration information further indicates the retransmission air interface resource. The retransmission air interface resource includes at least one of the following: the retransmission time domain resource and the retransmission frequency domain resource. In this implementation, the resource configuration information may further include at least one of the following: the offset value of the retransmission time domain resource relative to the specified moment, and the duration of the retransmission time domain resource.

Any slave device may further determine the location of the retransmission time domain resource based on the foregoing information in the resource configuration information, to transmit the cooperation data on the retransmission time domain resource.

Optionally, when the retransmission time domain resource includes the eleventh time domain resource, after S304, when the first slave device receives response information indicating that receiving fails from the second slave device, the first slave device retransmits the first cooperation data to the second slave device on the eleventh time domain resource.

Optionally, when the retransmission time domain resource includes the twelfth time domain resource, after S304, when the second slave device receives response information indicating that receiving fails from the first slave device, the second slave device retransmits the second cooperation data to the first slave device on the twelfth time domain resource.

The first cooperation data is cooperation data of the first slave device, and the second cooperation data is cooperation data of the second slave device.

In conclusion, this embodiment of this application provides a communication method applied to a point-to-multipoint short-range wireless communication system. In the method, when there is a data transmission requirement between two slave devices in the short-range wireless communication system, either of the two slave devices may send a communication request to a master device, so that the master device allocates an air interface resource to the two slave devices for data transmission, and the two slave devices can perform data transmission based on the air interface resource allocated by the master device. The air interface resource required for data transmission between the two slave devices is allocated according to requirements, that is, a communication link between the two slave devices is a temporary link established according to requirements. Therefore, when there is no data transmission requirement between the two slave devices, the air interface resource is released, no additional air interface resource is occupied, and the slave device does not need to send an empty packet to maintain the communication link. In conclusion, the method does not cause a waste of power consumption of the slave device or a waste of air interface resources.

Because the air interface resource required for data transmission between the two slave devices is allocated according to requirements, when there is no data transmission requirement between the two slave devices, the master device does not need to reserve the air interface resource for the two slave devices. Therefore, an air interface resource used by the master device to retransmit service data is not occupied, and transmission reliability of the service data is improved; and an additional idle air interface resource is not occupied, so that more slave devices can access the master device, thereby improving a multi-service concurrency capability in a communication system, and improving a data receiving and sending capability of the system. In addition, communication interaction between the slave devices is controlled by the master device in the communication system, so that a capability of the master device to control air interface resources of the entire communication system can be improved, thereby facilitating coexistence between a plurality of master devices.

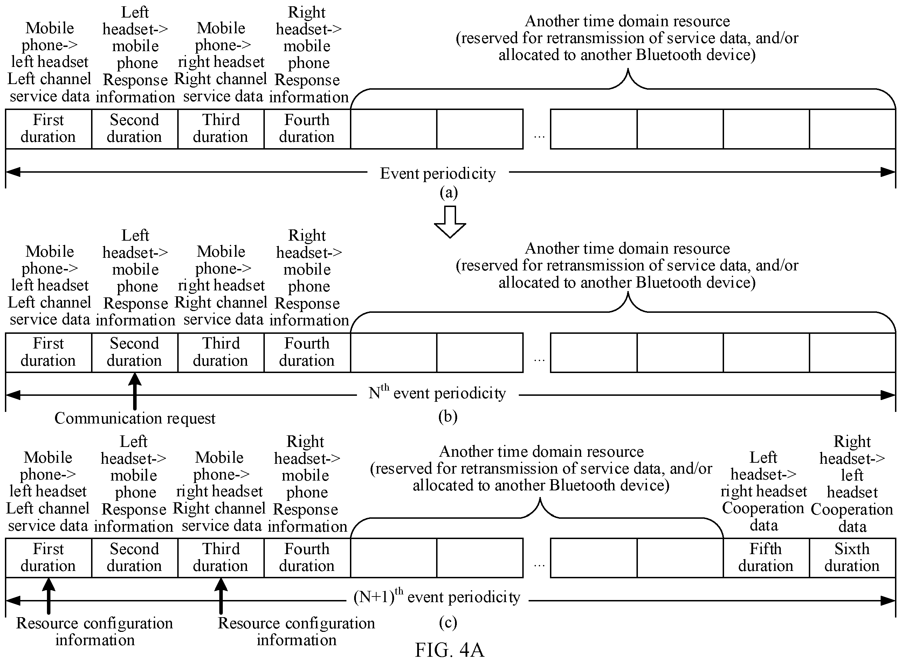

Based on the method provided in the embodiment shown in FIG. 3 and the Bluetooth system shown in FIG. 2A, this application further provides some communication examples in the Bluetooth system. In the Bluetooth system, a mobile phone and a TWS Bluetooth headset may transmit service data in a dual-transmit mode. The following provides descriptions with reference to FIG. 4A to FIG. 4D. In the following example, for specific descriptions of a process in which the mobile phone allocates the target air interface resource and the resource configuration information that indicates the target air interface resource, refer to the specific descriptions in the foregoing embodiments. Details are not described herein again.

Example 1: Refer to FIG. 4A. In this example, the mobile phone may separately carry the resource configuration information in a data frame sent to each headset.

In a default case (a case in which no cooperation data needs to be transmitted between the two headsets), there is no physical link between the two headsets, and there is no need to reserve a time domain resource for communication between the two headsets in an event periodicity. As shown in (a) in FIG. 4A, the mobile phone reserves only first duration to fourth duration in the event periodicity, and other time domain resources may be reserved for service data retransmission, or allocated to another Bluetooth device that accesses the mobile phone. For descriptions of the first duration to the fourth duration in this embodiment, refer to the first duration to the fourth duration in FIG. 2D. Details are not described herein again.

Therefore, in the default case, in the event periodicity, the mobile phone first sends, to a left headset within the first duration, a data frame that carries left channel service data; then, within the second duration, the left headset sends response information of the left channel service data to the mobile phone; within the third duration, the mobile phone sends, to a right headset, a data frame that carries right channel service data; and then, within the fourth duration, the right headset sends response information of the right channel service data to the mobile phone. In this way, the mobile phone may retransmit the left channel service data and/or the right channel service data in a subsequent air interface resource based on the response information of the left headset and the response information of the right headset. When there is a requirement for cooperation data exchange between the two headsets, any headset (the left headset is used as an example in this embodiment) may send a communication request to the mobile phone, to request the mobile phone to allocate an air interface resource for cooperation data transmission between the two headsets. As shown in (b) in FIG. 4A, the left headset may send a communication request to the mobile phone in second duration in an n^{th} event periodicity.

After receiving the communication request in the second duration in the n^{th} event periodicity, the mobile phone allocates a target air interface resource for transmission of cooperation data between the two headsets, generates resource configuration information that indicates the target air interface resource, sends, to the left headset in first duration of an (n+1)^{th} event periodicity, a data frame that carries the left channel service data and the resource configuration information, and sends, to the right headset in third duration in the (n+1)^{th} event periodicity, a data frame that carries the right channel service data and the resource configuration information, as shown in (c) in FIG. 4A. After receiving the resource configuration information, the left headset and the right headset may determine the target air interface resource in the subsequent air interface resource in the (n+1)^{th} event periodicity, that is, fifth duration and sixth duration shown in (c) in FIG. 4A. In this way, in the fifth duration in the (n+1)^{th} event periodicity, the left headset may send the cooperation data to the right headset; and in the sixth duration in the (n+1)^{th} event periodicity, the left headset may send the cooperation data to the right headset.

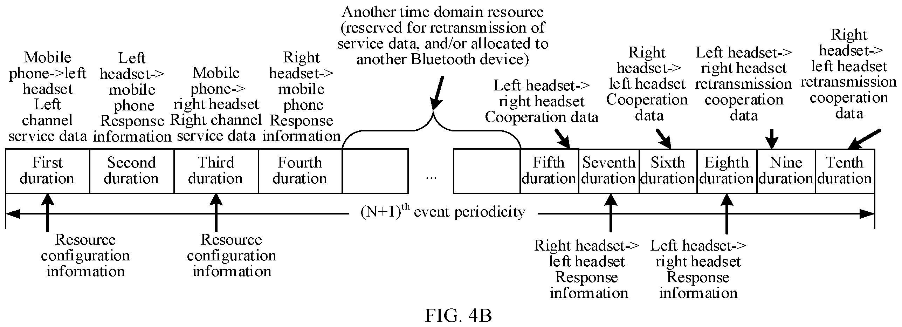

Example 2: Refer to FIG. 4B. The communication method is basically the same as the communication method in Example 1, and a difference lies in that: after receiving a communication request in the n^{th} event periodicity, the mobile phone allocates the target air interface resource (that is, the fifth duration and the sixth duration in FIG. 4B) for transmission of the cooperation data between the two headsets, and further allocates a response air interface resource (that is, seventh duration and eighth duration in FIG. 4B) for the two slave devices to feed back response information of the cooperation data, and allocates a retransmission air interface resource (that is, ninth duration and tenth duration in FIG. 4B) for retransmission of the cooperation data between the two slave devices.

After generating the resource configuration information that indicates the target air interface resource, the response air interface resource, and the retransmission air interface resource, the mobile phone sends, to the left headset within first duration in the (n+1)^{th} event periodicity, a data frame that carries the left channel service data and the resource configuration information, and sends, to the right headset within third duration in the (n+1)^{th} event periodicity, a data frame that carries the right channel service data and the resource configuration information.

After receiving the resource configuration information, the left headset and the right headset may determine each air interface resource in the subsequent air interface resource in the (n+1)^{th} event periodicity, that is, the fifth duration to the tenth duration shown in FIG. 4B. In this way, in the fifth duration in the (n+1)^{th} event periodicity, the left headset may send the cooperation data to the right headset; and in the sixth duration in the (n+1)^{th} event periodicity, the left headset may send the cooperation data to the right headset. The right headset may send the response information of the cooperation data to the left headset in seventh duration in the (n+1)^{th} event periodicity. When the response information indicates that receiving fails, the left headset may further retransmit the cooperation data to the right headset in ninth duration in the (n+1)^{th} event periodicity. The left headset may send the response information of the cooperation data to the right headset in eighth duration in the (n+1)^{th} event periodicity. When the response information indicates that receiving fails, the right headset may further retransmit the cooperation data to the right headset in tenth duration in the (n+1)^{th} event periodicity.

Optionally, in the event periodicities of Example 1 and Example 2, the mobile phone may further reserve a broadcast time domain resource (for example, reserve broadcast duration in the event periodicities) for broadcasting a synchronization signal. The mobile phone may send, in a broadcast manner within the broadcast duration, a synchronization frame that carries a clock synchronization signal.

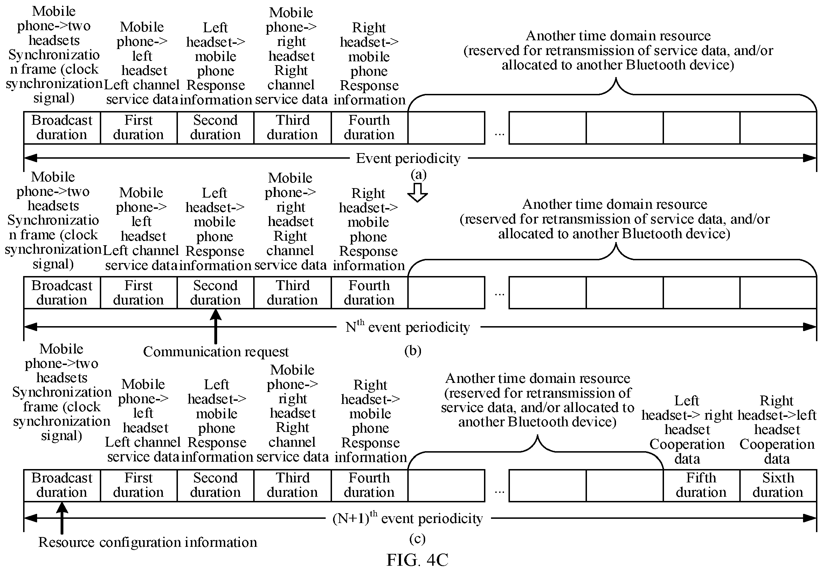

Example 3: Refer to FIG. 4C. In this example, the mobile phone may carry the resource configuration information in the broadcast synchronization frame.

Example 3 is similar to Example 1, and a difference lies in that, in a default case, the mobile phone further reserves the broadcast duration for broadcasting the synchronization signal to the slave device in the event periodicity, as shown in (a) in FIG. 4C. In this way, in the default case, within broadcast duration of a start phase of the event periodicity, the mobile phone may broadcast the synchronization frame that carries the clock synchronization signal. After receiving the synchronization frame, the slave device in the Bluetooth system performs clock synchronization the mobile phone.

When there is a requirement for cooperation data exchange between the two headsets, any headset (the left headset is still used as an example) may send a communication request to the mobile phone, to request the mobile phone to allocate an air interface resource for transmission of cooperation data between the two headsets. As shown in (b) in FIG. 4C, in second duration in the n^{th} event periodicity, the left headset may send a communication request to the mobile phone.

After receiving the communication request in the second duration in the n^{th} event periodicity, the mobile phone allocates a target air interface resource for transmission of the cooperation data between the two headsets, and generates resource configuration information that indicates the target air interface resource. The mobile phone broadcasts the resource to the two headsets by using a synchronization frame in broadcast duration in the (n+1)^{th} event periodicity, as shown in (c) in FIG. 4C.

After receiving the resource configuration information, the left headset and the right headset may determine the target air interface resource, that is, the fifth duration and the sixth duration shown in (c) in FIG. 4C, in the subsequent air interface resource in the (n+1)^{th} event periodicity. In this way, in the fifth duration in the (n+1)^{th} event periodicity, the left headset may send the cooperation data to the right headset; and in the sixth duration in the (n+1)th event periodicity, the left headset may send the cooperation data to the right headset.

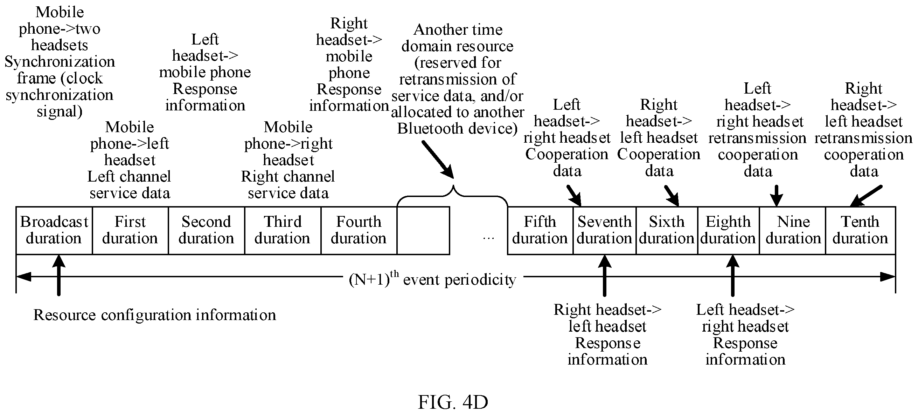

Example 4: Refer to FIG. 4D. The communication method is basically the same as the communication method in Example 3, and a difference lies in that: after receiving a communication request in the n^{th} event periodicity, the mobile phone allocates a target air interface resource (that is, the fifth duration and the sixth duration in FIG. 4D) for transmission of cooperation data between the two headsets, and further allocates a response air interface resource (that is, the seventh duration and the eighth duration in FIG. 4D) for the two slave devices to feed back response information of the cooperation data, and allocates a retransmission air interface resource (that is, the ninth duration and the tenth duration in FIG. 4D) for retransmission of the cooperation data between the two slave devices.

After generating resource configuration information that indicates the target air interface resource, the response air interface resource, and the retransmission air interface resource, the mobile phone broadcasts the resource configuration information to the two headsets by using a synchronization frame in the broadcast duration in the (n+1)^{th} event periodicity.

After receiving the resource configuration information, the left headset and the right headset may determine each air interface resource in the subsequent air interface resource in the (n+1)^{th} event periodicity, that is, the fifth duration to the tenth duration shown in FIG. 4D. In this way, in the fifth duration in the (n+1)^{th} event periodicity, the left headset may send the cooperation data to the right headset; and in the sixth duration in the (n+1)^{th} event periodicity, the left headset may send the cooperation data to the right headset. The right headset may send the response information of the cooperation data to the left headset in the seventh duration in the (n+1)^{th} event periodicity. When the response information indicates that receiving fails, the left headset may further retransmit the cooperation data to the right headset in the ninth duration in the (n+1)^{th} event periodicity. The left headset may send the response information of the cooperation data to the right headset in the eighth duration of the (n+1)^{th} event periodicity. When the response information indicates that receiving fails, the right headset may further retransmit the cooperation data to the right headset in the tenth duration in the (n+1)^{th} event periodicity.

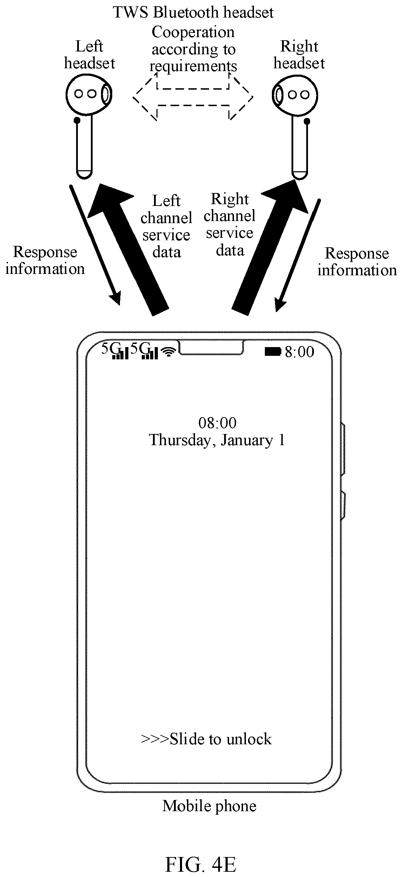

According to the foregoing Example 1 to Example 4, as shown in FIG. 4E, the mobile phone may allocate an air interface resource based on a cooperation data transmission requirement of the two headsets, and the two headsets may also implement on-demand cooperation.

It can be learned from FIG. 4A to FIG. 4D that, because the two headsets in the Bluetooth system do not need to establish a physical link, the two headsets do not need to periodically send an empty packet to maintain the physical link, and a waste of power consumption caused by sending an empty packet by two dual headsets can be obviously reduced. In addition, as shown in (a) in FIG. 4A and (a) in FIG. 4C, when there is no requirement for cooperation data transmission between the two headsets, the mobile phone does not need to reserve a fixed air interface resource for interaction between the two headsets in an event periodicity. Therefore, another time domain resource in the event periodicity may be used for service data retransmission or allocated to another Bluetooth device. Therefore, a service data retransmission opportunity is increased, and transmission reliability of service data in the Bluetooth system is improved. In addition, more Bluetooth devices can access the mobile phone, which improves a multi-service concurrency capability and a data receiving and sending capability in the system. In addition, interaction between the two headsets is controlled by the mobile phone, which improves a capability of the mobile phone to control air interface resources of the entire Bluetooth system, and facilitates coexistence of a plurality of master devices (for example, a plurality of mobile phones).

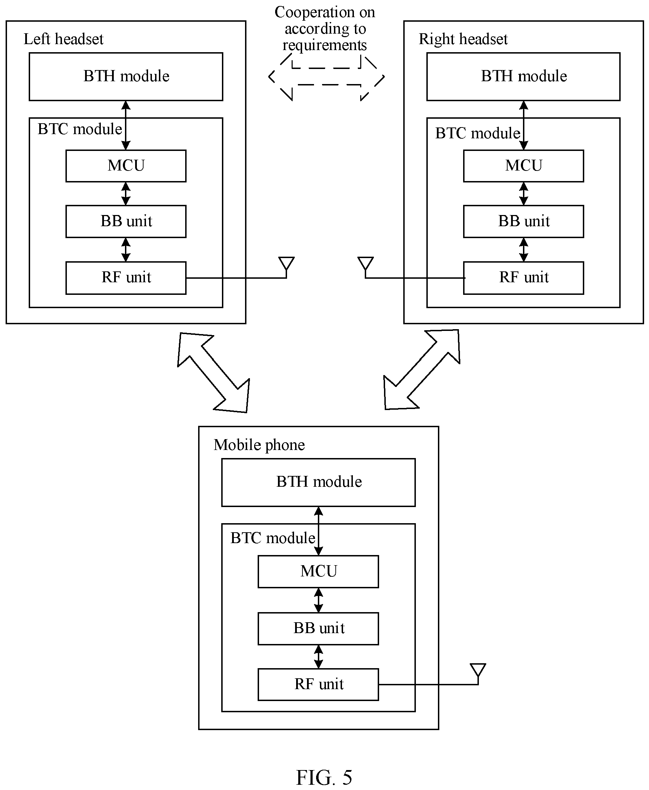

Based on the embodiment shown in FIG. 3 and the foregoing descriptions of the examples shown in FIG. 4A to FIG. 4D, for the Bluetooth system shown in FIG. 4E, this application further provides an example of a Bluetooth system. Refer to FIG. 5. Each Bluetooth device includes a Bluetooth controller (Bluetooth controller, BTC) module and a Bluetooth host (Bluetooth host, BTH) module.

The BTH module is configured to control and manage the BTC module, for example, deliver instructions to the BTC, and receive data or an event reported by the BTC.

The BTC module receives, transmits, parses, and processes signals. Specifically, the BTC module may include: a micro control unit (micro control unit, MCU), a baseband (baseband, BB) unit, and a radio frequency (radio frequency, RF) unit.

The MAC is configured to: receive instructions of the BTH module, report data or time to the BTH module, and perform data analysis, calculation, and processing functions.

The BB unit generates a baseband signal based on data sent by the MCU unit, and decodes a baseband signal received from the RF.

The RF unit is configured to: perform radio frequency processing on the baseband signal to form a radio frequency signal, so as to transmit the radio frequency signal through an air interface; and receive the radio frequency signal through the air interface, perform radio frequency processing on a radio frequency signal, generate a baseband signal, and feed back the baseband signal to the BB unit for decoding.

As shown in FIG. 5, when determining that there is a cooperation data transmission requirement between the two headsets, a BTH module of any headset (left headset) delivers a communication request to a BTC module of the left headset. After being processed by an MCU and a BB unit in the BTC module, the communication request is sent to the mobile phone by using an RF unit.

After receiving the communication request, an RF unit in a BTC module of the mobile phone processes and parses the communication request by using a BB unit and an MCU, to obtain the communication request. Then, the MCU of the mobile phone allocates, based on the communication request, a target air interface resource for transmission of cooperation data of the two headsets, and generates resource configuration information that indicates the target air interface resource. Finally, the MCU of the mobile phone broadcasts or sends the resource configuration information to the left headset and the right headset respectively by using the BB unit and an RF unit.

After receiving the resource configuration information, RF units in BTC modules of the two headsets process and parse the resource configuration information by using the BB units and the MCUs, to determine a location of the target air interface resource allocated by the mobile phone; and then the left headset and the right headset may transmit the cooperation data based on the target air interface resource.

It should be noted that, in the descriptions of the embodiment shown in FIG. 3 and the examples shown in FIG. 4A to FIG. 4D, the Bluetooth system is used as an example, and does not constitute any limitation on an application scenario of the communication method provided in this embodiment of this application. The Bluetooth system may be a communication system established based on a conventional Bluetooth technology, or may be a communication system established based on a future evolved Bluetooth technology. In addition, the foregoing embodiments or examples may be further applicable to a communication system established by using another short-range wireless communication technology (refer to the foregoing term explanation). This is not limited in this application.

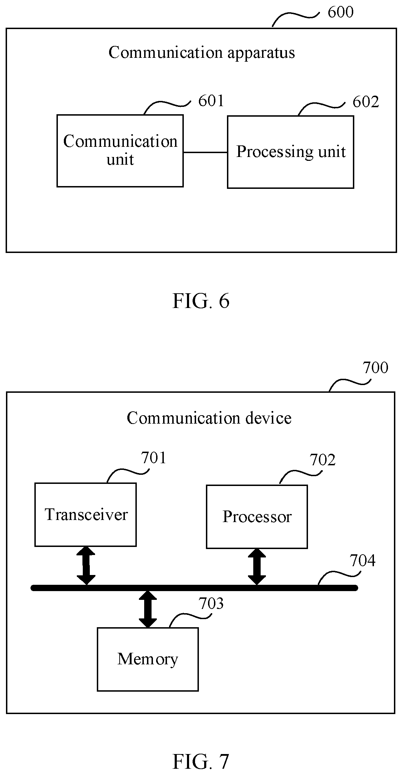

Based on a same technical concept, this application further provides a communication apparatus. A structure of the apparatus is shown in FIG. 6, and includes a communication unit 601 and a processing unit 602. The communication apparatus 600 may be applied to any communication device in the short-range wireless communication system shown in FIG. 1. Optionally, a representation form of the communication apparatus 600 may be a communication device, for example, a terminal device; or the communication apparatus 600 may be another apparatus that can implement a function of the communication device, for example, a processor or a chip in the communication device. Specifically, the communication apparatus 600 may be some programmable chips such as a field-programmable gate array (field-programmable gate array, FPGA), a complex programmable logic device (complex programmable logic device, CPLD), an application specific integrated circuit (application specific integrated circuit, ASIC), or a system on chip (System on a chip, SOC).

The following describes functions of the units in the communication apparatus 600.

The communication unit 601 is configured to: receive and send data. The communication unit 601 may be implemented by using a transceiver, for example, a communication module that supports a short-range wireless communication technology.

In an implementation, when the communication apparatus 600 is applied to the master device in the embodiment shown in FIG. 3, the processing unit 602 is configured to:
receive a communication request from a first slave device by using the communication unit 601, where the communication request is used to request to perform data transmission with a second slave device; and
send resource configuration information by using the communication unit 601 in response to the communication request, where the resource configuration information indicates a target air interface resource, and the target air interface resource is an air interface resource used for data transmission between the first slave device and the second slave device.

Optionally, the target air interface resource includes at least one of the following: a target frequency domain resource and a target time domain resource.

Optionally, when the target air interface resource includes the target time domain resource, the resource configuration information includes at least one of the following: clock synchronization information, an offset value of the target time domain resource relative to a specified moment, and duration of the target time domain resource.

The clock synchronization information indicates to keep clock synchronization with the master device.

Optionally, when the target air interface resource includes the target frequency domain resource, the resource configuration information includes frequency indication information that indicates the target frequency domain resource.

Optionally, the resource configuration information further includes security protection information, and the security protection information indicates at least one of the following: an encryption manner, an encryption algorithm, and a key.

Optionally, the processing unit 602 is configured to:
broadcast the resource configuration information by using the communication unit 601; and
separately send the resource configuration information to the first slave device and the second slave device by using the communication unit 601.

Optionally, the processing unit 602 is configured to:
broadcast, by using the communication unit 601 in an event event periodicity, a synchronization frame that carries the resource configuration information.

Optionally, the processing unit 602 is configured to:
send, on a first time domain resource in an event periodicity by using the communication unit 601, a first data frame that carries the resource configuration information to the first slave device; and
send, on a second time domain resource in the event periodicity by using the communication unit 601, a second data frame that carries the resource configuration information to the second slave device.

The first time domain resource is a time domain resource reserved for the master device to send service data to the first slave device in the event periodicity, the second time domain resource is a time domain resource reserved in the event periodicity for the master device to send service data to the second slave device, and the first time domain resource does not overlap the second time domain resource.

Optionally, the processing unit 602 is configured to:
receive the communication request on a third time domain resource in an event periodicity by using the communication unit 601, where the third time domain resource is a time domain resource reserved in the event periodicity for the first slave device to feed back response information of the service data to the master device. Optionally, the first slave device and the second slave device are binaural true wireless TWS Bluetooth headsets.

In another implementation, when the communication apparatus 600 is applied to the slave device in the embodiment shown in FIG. 3, the processing unit 602 is configured to:
receive, by using the communication unit 601, resource configuration information sent by a master device in response to a communication request, where the resource configuration information indicates a target air interface resource, the target air interface resource is an air interface resource used for data transmission between the slave device and another slave device, and the communication request is used to request the slave device to perform data transmission with the another slave device; and
perform data transmission with the another slave device by using the target air interface resource indicated by the resource configuration information and by using the communication unit 601.

Optionally, the target air interface resource includes at least one of the following: a target frequency domain resource and a target time domain resource.

Optionally, when the target air interface resource includes the target time domain resource, the resource configuration information includes at least one of the following: clock synchronization information, an offset value of the target time domain resource relative to a specified moment, and duration of the target time domain resource.

The clock synchronization information indicates to keep clock synchronization with the master device.

Optionally, when the target resource includes the target frequency domain resource, the resource configuration information includes frequency indication information that indicates the target frequency domain resource. Optionally, the resource configuration information further includes security protection information, and the security protection information indicates at least one of the following: an encryption manner, an encryption algorithm, and a key.

Optionally, the processing unit 602 is configured to:
receive, by using the communication unit 601 in an event event periodicity, a synchronization frame that carries the resource configuration information; and
receive, by using the communication unit 601 on a first time domain resource in the event periodicity, a first data frame that carries the resource configuration information, where the first time domain resource is a time domain resource reserved in the event periodicity for the master device to send service data to the slave device. Optionally, the processing unit 602 is further configured to:
   before receiving, by using the communication unit 601, the resource configuration information from the master device in response to the communication request, send the communication request to the master device by using the communication unit 601.

Optionally, the processing unit 602 is configured to:
send the communication request to the master device on a third time domain resource in an event periodicity by using the communication unit 601, where the third time domain resource is a time domain resource reserved in the event periodicity for the slave device to feed back response information of the service data to the master device.

Optionally, the communication request is sent by the another slave device to the master device.

Optionally, the slave device and the another slave device are binaural true wireless TWS Bluetooth headsets, and the data transmitted between the slave device and the another slave device includes at least one of the following:
playback synchronization information, volume synchronization information, headset location information, headset battery level information, configuration synchronization information, and interference information.

It should be noted that, in the foregoing embodiment of this application, division into the modules is an example, is merely logical function division, and may be other division during actual implementation. In addition, function units in embodiments of this application may be integrated into one processing unit, may exist alone physically, or two or more units may be integrated into one unit. The integrated unit may be implemented in a form of hardware, or may be implemented in a form of a software functional unit.

Based on a same technical concept, this application further provides a communication device. The communication device may be applied to the short-range wireless communication system shown in FIG. 1, can implement the method provided in the foregoing embodiment and the example, and has a function of the communication apparatus 600 shown in FIG. 6. Refer to FIG. 7. The communication device 700 includes a transceiver 701, a processor 702, and a memory 703. The transceiver 701, the processor 702, and the memory 703 are connected to each other.

Optionally, the transceiver 701, the processor 702, and the memory 703 are connected to each other through a bus 704. The bus 704 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 7, but this does not mean that there is only one bus or only one type of bus.

The transceiver 701 is configured to: receive and send a signal, to implement communication and interaction with another device. In this application, the transceiver 701 may be a communication module that supports a short-range wireless communication technology, for example, a Bluetooth module, an RF module, or the like. The transceiver 701 is coupled to the processor 702, to implement the communication method provided in embodiments of this application. In an implementation, the communication device 700 may be a master device in the embodiment shown in FIG. 3. The transceiver 701 is configured to receive a communication request from a first slave device, where the communication request is used to request to perform data transmission with a second slave device.

The processor 702 is configured to send resource configuration information by using the transceiver 701 in response to the communication request, where the resource configuration information indicates a target air interface resource, and the target air interface resource is an air interface resource used for data transmission between the first slave device and the second slave device.

In another implementation, the communication device 700 may be any slave device in the embodiment shown in FIG. 3.

The transceiver 701 is configured to receive resource configuration information sent by a master device in response to a communication request, where the communication request is used to request the slave device to perform data transmission with another slave device.

The processor 702 is configured to perform, by using the transceiver 701, data transmission with the another slave device based on a target air interface resource indicated by the resource configuration information, where the target air interface resource is an air interface resource used for data transmission between the slave device and the another slave device.

It should be noted that a specific function of the processor 702 is not described in detail in this embodiment. For a specific function of the processor 702, refer to the description in the embodiment shown in FIG. 3 and the communication method provided in the examples shown in FIG. 4A to FIG. 4D, and the specific function description of the communication apparatus 600 in the embodiment shown in FIG. 6. Details are not described herein again. The memory 703 is configured to store program instructions, data, and the like. Specifically, the program instructions may include program code. The program code includes computer operation instructions. The processor 702 executes the program instructions stored in the memory 703, and implements the foregoing function by using the data stored in the memory 703, so as to implement the communication method provided in the foregoing embodiments.

It may be understood that the memory 703 in FIG. 7 in this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double data rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct rambus RAM, DR RAM). It should be noted that the memory of the systems and methods described in this specification includes but is not limited to these and any memory of another proper type.

Based on the foregoing embodiments, an embodiment of this application further provides a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any available medium that can be accessed by the computer. This is used as an example but is not limited to: a specific example of the memory 703 in the communication device 700 shown in FIG. 7, another optical disc storage, another magnetic disk storage medium, or another magnetic storage device, or any other medium that can be used to carry or store expected program code in a form of an instruction or a data structure and that can be accessed by a computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions related to the master device and the slave device in the foregoing embodiments. In a possible design, the chip system further includes a memory. The memory is configured to store a program and data that are necessary for the computer apparatus. The chip system may include a chip, or may include a chip and another discrete component.

In conclusion, embodiments of this application provide a communication method and a device that are applied to a point-to-multipoint short-range wireless communication system. In the method, when there is a data transmission requirement between two slave devices in a short-range wireless communication system, any one of the two slave devices may send a communication request to a master device, so that the master device allocates an air interface resource for data transmission between the two slave devices, and the two slave devices can perform data transmission based on the air interface resource allocated by the master device. The air interface resource required for data transmission between two slave devices is allocated according to requirements, that is, a communication link between the two slave devices is a temporary link established according to requirements. Therefore, when there is no data transmission requirement between the two slave devices, the air interface resource is released, and no additional air interface resource is occupied, and the slave device does not need to send an empty packet to maintain the communication link. In conclusion, the method does not cause a waste of power consumption of the slave device or a waste of air interface resources.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A communication method applied to a point-to-multipoint short-range wireless communication system, comprising:
receiving, by a master device, a communication request from a first slave device, wherein the communication request is used to request to perform data transmission with a second slave device; and
sending, by the master device, resource configuration information in response to the communication request, wherein the resource configuration information indicates a target air interface resource, and the target air interface resource is an air interface resource used for data transmission between the first slave device and the second slave device.

2. The method according to claim 1, wherein the target air interface resource comprises at least one of the following:
a target frequency domain resource and a target time domain resource.

3. The method according to claim 2, wherein when the target air interface resource comprises the target time domain resource, the resource configuration information comprises at least one of the following:
clock synchronization information, an offset value of the target time domain resource relative to a specified moment, and duration of the target time domain resource, wherein
the clock synchronization information indicates to keep clock synchronization with the master device.

4. The method according to claim 2 or 3, wherein when the target air interface resource comprises the target frequency domain resource, the resource configuration information comprises frequency indication information that indicates the target frequency domain resource.

5. The method according to any one of claims 1 to 4, wherein the resource configuration information further comprises security protection information, and the security protection information indicates at least one of the following: an encryption manner, an encryption algorithm, and a key.

6. The method according to any one of claims 1 to 5, wherein the sending resource configuration information comprises:
broadcasting, by the master device, the resource configuration information; or
separately sending, by the master device, the resource configuration information to the first slave device and the second slave device.

7. The method according to claim 6, wherein the broadcasting, by the master device, the resource configuration information comprises:
broadcasting, by the master device in an event event periodicity, a synchronization frame that carries the resource configuration information.

8. The method according to claim 6, wherein the separately sending, by the master device, the resource configuration information to the first slave device and the second slave device comprises:
sending, by the master device on a first time domain resource in an event periodicity, a first data frame that carries the resource configuration information to the first slave device; and
sending, by the master device on a second time domain resource in the event periodicity, a second data frame that carries the resource configuration information to the second slave device, wherein
the first time domain resource is a time domain resource reserved in the event periodicity for the master device to send service data to the first slave device, the second time domain resource is a time domain resource reserved in the event periodicity for the master device to send service data to the second slave device, and the first time domain resource does not overlap the second time domain resource.

9. The method according to any one of claims 1 to 8, wherein the receiving, by a master device, a communication request from a first slave device comprises:
receiving, by the master device, the communication request on a third time domain resource in the event periodicity, wherein the third time domain resource is a time domain resource reserved in the event periodicity for the first slave device to feed back response information of the service data to the master device.

10. A communication method applied to a point-to-multipoint short-range wireless communication system, comprising:
receiving, by a first slave device, resource configuration information sent by a master device in response to a communication request, wherein the resource configuration information indicates a target air interface resource, the target air interface resource is an air interface resource used for data transmission between the first slave device and a second slave device, and the communication request is used to request the first slave device to perform data transmission with the second slave device; and
performing, by the first slave device, data transmission with the second slave device by using the target air interface resource indicated by the resource configuration information.

11. The method according to claim 10, wherein the target air interface resource comprises at least one of the following:
a target frequency domain resource and a target time domain resource.

12. The method according to claim 11, wherein when the target air interface resource comprises the target time domain resource, the resource configuration information comprises at least one of the following:
clock synchronization information, an offset value of the target time domain resource relative to a specified moment, and duration of the target time domain resource, wherein
the clock synchronization information indicates to keep clock synchronization with the master device.

13. The method according to claim 11 or 12, wherein when the target resource comprises the target frequency domain resource, the resource configuration information comprises frequency indication information that indicates the target frequency domain resource.

14. The method according to any one of claims 10 to 13, wherein the resource configuration information further comprises security protection information, and the security protection information indicates at least one of the following: an encryption manner, an encryption algorithm, and a key.

15. The method according to any one of claims 10 to 14, wherein the receiving, by a first slave device, resource configuration information from a master device in response to a communication request comprises:
receiving, by the first slave device in an event event periodicity, a synchronization frame that carries the resource configuration information; or
receiving, by the first slave device on a first time domain resource in an event periodicity, a first data frame that carries the resource configuration information, wherein the first time domain resource is a time domain resource reserved in the event periodicity for the master device to send service data to the first slave device.

16. The method according to any one of claims 10 to 15, wherein before the receiving, by a first slave device, resource configuration information of a master device in response to a communication request, the method further comprises:
sending, by the first slave device, the communication request to the master device.

17. The method according to claim 16, wherein the sending, by the first slave device, the communication request to the master device comprises:
sending the communication request to the master device on a third time domain resource in the event periodicity, wherein the third time domain resource is a time domain resource reserved in the event periodicity for the first slave device to feed back response information of the service data to the master device.

18. The method according to any one of claims 10 to 15, wherein the communication request is sent by the second slave device to the master device.

19. The method according to any one of claims 10 to 18, wherein the first slave device and the second slave device are binaural true wireless TWS Bluetooth headsets, and the data comprises at least one of the following:
playback synchronization information, volume synchronization information, headset location information, headset battery level information, configuration synchronization information, and interference information.

20. A master device, comprising:
a transceiver, and a processor coupled to the transceiver, wherein
the transceiver is configured to receive a communication request from a first slave device, wherein the communication request is used to request to perform data transmission with a second slave device; and
the processor is configured to send resource configuration information by using the transceiver in response to the communication request, wherein the resource configuration information indicates a target air interface resource, and the target air interface resource is an air interface resource used for data transmission between the first slave device and the second slave device.

21. The device according to claim 20, wherein the target air interface resource comprises at least one of the following:
a target frequency domain resource and a target time domain resource.

22. The device according to claim 21, wherein when the target air interface resource comprises the target time domain resource, the resource configuration information comprises at least one of the following:
clock synchronization information, an offset value of the target time domain resource relative to a specified moment, and duration of the target time domain resource, wherein
the clock synchronization information indicates to keep clock synchronization with the master device.

23. The device according to claim 21 or 22, wherein when the target air interface resource comprises the target frequency domain resource, the resource configuration information comprises frequency indication information that indicates the target frequency domain resource.

24. The device according to any one of claims 20 to 23, wherein the resource configuration information further comprises security protection information, and the security protection information indicates at least one of the following: an encryption manner, an encryption algorithm, and a key.

25. The device according to any one of claims 20 to 24, wherein the processor is configured to:
broadcast the resource configuration information by using the transceiver; or
separately send the resource configuration information to the first slave device and the second slave device by using the transceiver.

26. The device according to claim 25, wherein the processor is configured to:
broadcast, by using the transceiver in an event event periodicity, a synchronization frame that carries the resource configuration information.

27. The device according to claim 25, wherein the processor is configured to:
send, by using the transceiver, a first data frame that carries the resource configuration information to the first slave device on a first time domain resource in an event periodicity; and
send, by using the transceiver on a second time domain resource in the event periodicity, a second data frame that carries the resource configuration information to the second slave device, wherein
the first time domain resource is a time domain resource reserved in the event periodicity for the master device to send service data to the first slave device, the second time domain resource is a time domain resource reserved in the event periodicity for the master device to send service data to the second slave device, and the first time domain resource does not overlap the second time domain resource.

28. The device according to any one of claims 20 to 27, wherein the processor is configured to:
receive the communication request on a third time domain resource in an event periodicity by using the transceiver, wherein the third time domain resource is a time domain resource reserved in the event periodicity for the first slave device to feed back response information of the service data to the master device.

29. A slave device, comprising:
a transceiver, and a processor coupled to the transceiver, wherein
the transceiver is configured to receive resource configuration information sent by a master device in response to a communication request, wherein the communication request is used to request the slave device to perform data transmission with another slave device; and
the processor is configured to perform, by using the transceiver, data transmission with the another slave device based on a target air interface resource indicated by the resource configuration information, wherein the target air interface resource is an air interface resource used for data transmission between the slave device and the another slave device.

30. The device according to claim 29, wherein the target air interface resource comprises at least one of the following:
a target frequency domain resource and a target time domain resource.

31. The device according to claim 30, wherein when the target air interface resource comprises the target time domain resource, the resource configuration information comprises at least one of the following:
clock synchronization information, an offset value of the target time domain resource relative to a specified moment, and duration of the target time domain resource, wherein
the clock synchronization information indicates to keep clock synchronization with the master device.

32. The device according to claim 30 or 31, wherein when the target resource comprises the target frequency domain resource, the resource configuration information comprises frequency indication information that indicates the target frequency domain resource.

33. The device according to any one of claims 29 to 32, wherein the resource configuration information further comprises security protection information, and the security protection information indicates at least one of the following: an encryption manner, an encryption algorithm, and a key.

34. The device according to any one of claims 29 to 33, wherein the processor is configured to:
receive, by using the transceiver in an event event periodicity, a synchronization frame that carries the resource configuration information; or
receive, by using the transceiver on a first time domain resource in an event periodicity, a first data frame that carries the resource configuration information, wherein the first time domain resource is a time domain resource reserved in the event periodicity for the master device to send service data to the slave device.

35. The device according to any one of claims 29 to 34, wherein the processor is further configured to:
before receiving, by using the transceiver, the resource configuration information from the master device in response to the communication request, send the communication request to the master device by using the transceiver.

36. The device according to claim 35, wherein the processor is configured to:
send the communication request to the master device on a third time domain resource in the event periodicity by using the transceiver, wherein the third time domain resource is a time domain resource reserved in the event periodicity for the slave device to feed back response information of the service data to the master device.

37. The device according to any one of claims 29 to 34, wherein the communication request is sent by the another slave device to the master device.

38. The device according to any one of claims 29 to 37, wherein the slave device and the another slave device are binaural true wireless TWS Bluetooth headsets; and the data comprises at least one of the following:
playback synchronization information, volume synchronization information, headset location information, headset battery level information, configuration synchronization information, and interference information.

39. A short-range wireless communication system, comprising:
a master device, configured to: receive a communication request from a first slave device, wherein the communication request is used to request to perform data transmission with a second slave device; and send resource configuration information in response to the communication request, wherein the resource configuration information indicates a target air interface resource, and the target air interface resource is an air interface resource used for data transmission between the first slave device and the second slave device; and
a first slave device, configured to: send the communication request to the master device; receive resource configuration information from the master device; and perform data transmission with the second slave device by using the target air interface resource indicated by the resource configuration information, wherein
the second slave device is configured to: receive the resource configuration information from the master device; and perform data transmission with the first slave device by using the target air interface resource indicated by the resource configuration information.

40. A computer-readable storage medium, wherein the computer-readable storage medium stores a computer program, and when the computer program is run on a computer, the computer is enabled to perform the method according to any one of claims 1 to 19.

41. A computer program product, wherein when the computer program product runs on a computer, the computer is enabled to perform the method according to any one of claims 1 to 19.

42. A chip, wherein the chip is coupled to a memory; and the chip reads a computer program stored in the memory to perform the method according to any one of claims 1 to 19.
